# EUROPÄISCHE PATENTSCHRIFT

(11) **EP 2 274 586 B1**
(45) Veröffentlichungstag und Bekanntmachung des Hinweises auf die Patenterteilung: **30.05.2012**
(21) Anmeldenummer: 09741831.3
(22) Anmeldetag: 28.04.2009
(51) Int. Cl.: G01L 9/00, G01L 13/02

(54) **VORRICHTUNG ZUM MESSEN EINER DRUCKDIFFERENZ**
DEVICE FOR MEASURING A PRESSURE DIFFERENTIAL
DISPOSITIF DE MESURE D'UNE DIFFÉRENCE DE PRESSION

(30) Priorität: 06.05.2008 DE 102008022229
(43) Veröffentlichungstag der Anmeldung: 19.01.2011
(73) Patentinhaber: Hydac Electronic GmbH, 66128 Saarbrücken (DE)
(72) Erfinder: HEROLD, Frank, 66129 Saarbrücken (DE); MANNEBACH, Horst, 56294 Münstermaifeld (DE); STEFFENSKY, Jörg, 66763 Dillingen (DE)
(74) Vertreter: Crazzolara, Helmut
(86) Internationale Anmeldenummer: PCT/EP2009/003066
(87) Internationale Veröffentlichungsnummer: WO 2009/135612

(56) Entgegenhaltungen:
- WO-A-01/14841
- DE-A1- 4 413 225
- FR-A- 2 807 514
- FR-A- 2 885 218
- GB-A- 1 285 889
- JP-A- 1 023 134
- JP-A- 9 170 958
- US-A- 4 527 430
- US-A- 5 284 061

## Beschreibung

Die Erfindung betrifft eine Vorrichtung zum Messen einer Druckdifferenz zwischen einer Hochdruckseite und einer Niederdruckseite.

Abhängig vom Anwendungsfall kann es bei derartigen Vorrichtungen erforderlich sein, dass die Hochdruckseite von der Niederdruckseite fluiddicht getrennt ist. Hierzu kann eine Membran zwischen Hochdruckseite und Niederdruckseite angeordnet sein, welche die Medientrennung gewährleistet. Derartige Vorrichtungen erfordern jedoch eine gewisse Baugröße und sind außerdem aufwendig und damit auch kostenintensiv in der Herstellung.

Aus der DE 2 109 673 A ist ein Differenzdruckwerk bekannt, bei der das membran- oder balgförmige Messorgan, welches mit dem die Messwerkausschläge nach außen übertragenden Hebelwerk verbunden ist, in einer zwischen den beiden Differenzdruckräumen liegenden und von letzteren durch Zwischenwände getrennten Messkammer angeordnet und von beiden Seiten mit je einer hohlen, im einen Druckraum bzw. im anderen Druckraum angeordneten Vorlagemembran durch das Kontaktmedium gekoppelt ist.

Aus der DE 1 914 903 ist eine Differenzdruckmessvorrichtung bekannt, bestehend aus zwei mit den Messdrücken beaufschlagbaren Druckkammern, je einer von dem Messdruck einer Druckkammer beaufschlagbaren und unter dem Einfluss des Messdrucks gegen elastische Rückstellkräfte verstellbaren sowie aus deformierbarem Material gefertigten Wandung in jeder Kammer und aus einer mit einer Flüssigkeit dicht ausgefüllten dritten Kammer, die von den beiden beweglichen Wandungen begrenzt wird. Die dritte Kammer ist durch wenigstens eine Trennwand in durch eine Wandungsöffnung miteinander verbundene Teile zerlegt und in dieser Öffnung ist ein Messkörper angeordnet, der über je eine Zugfeder mit den beiden verstellbaren Kammerwandungen in Verbindung steht und Teil eines elektrischen Stellungsabgriffs ist.

Aus der DE 690 18 453 T2 ist ein piezoelektrischer Differenzdrucksensor für einen Wirbeldurchflussmesser bekannt, bei dem ein Wirbelsensor mit geringer Masse in einem Messgerätegehäuse auswechselbar angeordnet ist. Das Gehäuse weist einen Ablösekörper auf, der quer zur Bahn einer Fluidströmung angeordnet ist, um alternierende Wirbel zu erzeugen.

Aus der DE 44 13 225 A1 ist ein Staubsauger mit einer Saugleistungsanzeige bekannt, bei welcher die Druckdifferenz aus dem Unterdruck in einem Saugkanal vor dem Filterbeutel und dem Überdruck nach dem Gebläse gebildet ist. Die Abdichtung erfolgt mittels Faltenbälgen. Eine Druckfeder umfasst einen der Faltenbälge und dient zur Erzielung einer Grundstellung der Saugleistungsanzeige.

Aus der FR 2 807 514 A, der JP 01 023134 A und der JP 09 170958 A sind Vorrichtungen gemäß dem Oberbegriff des Anspruchs 1 bekannt.

Der Erfindung liegt die Aufgabe zugrunde, eine Vorrichtung bereitzustellen, welche die Nachteile des Standes der Technik überwindet. In einer Ausführungsart soll die Vorrichtung in einer kleineren Bauart ausführbar sein. Außerdem soll die Vorrichtung und insbesondere die Medientrennung verschmutzungsunempfindlich sein und einen dauerhaft zuverlässigen Betrieb gewährleisten.

Diese Aufgabe ist durch die im Anspruch 1 bestimmte Vorrichtung gelöst. Besondere Ausführungsarten der Erfindung sind in den Unteransprüchen bestimmt.

Der den Geber vorspannende Kraftspeicher ist zwischen Hochdruckseite und Niederdruckseite angeordnet und stellt durch seine dichte Anlage die Medientrennung bereit. In einer Ausführungsart ist der Geber hin- und herbewegbar, insbesondere linear hin- und herbewegbar. Auf den Geber wirkt dabei zum einen die Vorspannung des Kraftspeichers und zum anderen die Druckdifferenz zwischen Hochdruckseite und Niederdruckseite. Die von der Druckdifferenz abhängige Position des Gebers kann kontinuierlich messbar sein. Alternativ oder ergänzend kann auch das Erreichen vorgebbarer Positionen des Gebers messbar sein.
Es können dabei alle aus dem Stand der Technik bekannten Sensorprinzipien angewendet werden, beispielsweise induktive, kapazitive oder auch optische Sensorprinzipien.

In einer Ausführungsart ist der Geber ein Permanentmagnet, der auf einen an einem vorzugsweise feststehenden Teil der Vorrichtung angeordneten magnetischen Sensor wirkt, beispielsweise auf ein HALL-Element oder auf einen Reedkontakt, mittels dem die Position des Gebers elektrisch signalisierbar ist. Der Sensor oder eine daran angeschlossene Auswerteelektronik kann die Position des Gebers und mithin die Druckdifferenz als analoges Signal ausgeben, beispielsweise als 0 bis 10 V-Signal oder 4 bis 20 mA-Signal. Alternativ oder ergänzend kann der Sensor oder eine daran angeschlossene Auswerteelektronik auch das Erreichen von gegebenenfalls auch einstellbaren Schaltpunkten signalisieren, beispielsweise das Erreichen und/oder das Über- und Unterschreiten von 10, 20, 50 und/oder 80 % der maximal messbaren Druckdifferenz.

Grundsätzlich kann der Kraftspeicher mit dem Geber einerseits und/oder mit dem feststehenden Teil der Vorrichtung andererseits fest und fluiddicht verbunden sein, beispielsweise verschweißt oder verlötet sein. In einer Ausführungsart ist der Kraftspeicher durch den in der Vorrichtung herrschenden Differenzdruck des Fluids in dichter Anlage an dem Geber und/oder an dem feststehenden Teil der Vorrichtung. Dadurch kann auf die fertigungstechnisch aufwendige fluiddichte Verbindung durch ein Fügeverfahren verzichtet werden. Alternativ oder ergänzend kann der Kraftspeicher durch seine Vorspannung in dichter Anlage an dem Geber und/oder an dem feststehenden Teil der Vorrichtung sein. Dadurch ist auch im Falle einer verschwindenden Druckdifferenz die Medientrennung gewährleistet.

Erfindungsgemäße Vorrichtungen können beispielsweise für die Messung der an einem Filterelement, insbesondere an einem hydraulischen Filterelement, auftretende Druckdifferenz eingesetzt werden, die ein Maß für den Verschmutzungsgrad des Filterelements ist. In solchen Anwendungsfällen ist abhängig von Anwendungsfall keine hundertprozentig dichte Trennung zwischen Hochdruckseite und Niederdruckseite erforderlich. Vielmehr kann es in solchen Anwendungsfällen vorteilhaft sein, wenn bei Überschreiten eines vorgebbaren Wertes der Druckdifferenz ein Fluidstrom zwischen Hochdruckseite und Niederdruckseite in der Art eines Bypasses über den Kraftspeicher möglich ist.

Der Kraftspeicher weist mehrere Tellerfederelemente auf. Tellerfedern können als flache, kegelförmige Ringschalen ausgebildet sein, die in Achsrichtung belastbar sind. Die Lasteinleitung kann gleichmäßig verteilt über die innere Stirnseite und die äußere Stirnseite erfolgen. In einer Ausführungsart ist das Tellerfederelement mit seiner inneren und äußeren Stirnseite in Anlage an dem Geber einerseits und einem feststehenden Teil der Vorrichtung andererseits.

Der Kraftspeicher weist mehrere, hintereinander angeordnete Tellerfederelemente auf. Die Anzahl der Tellerfederelemente bestimmt den Federweg des Kraftspeichers. Benachbarte Tellerfederelemente können dabei jeweils mit ihrer inneren Stirnseite dichtend aneinander liegen oder jeweils mit ihrer äußeren Stirnseite dichtend aneinander liegen. Auf diese Weise bilden die hintereinander angeordneten Tellerfederelemente eine Art Faltenbalg, wobei die Länge des Faltenbalges durch die Anzahl der Tellerfederelemente bestimmbar ist. Zwischen der radial inneren Seite und der radial äußeren Seite der Tellerfederelemente steht der Differenzdruck an.

Gegenüber einem Faltenbalg ist die Lösung mit den durch Vorspannung in dichte Anlage gehaltenen, aber lösbar aneinanderliegenden Kraftspeicher-oder Tellerfederelementen auch wegen der Überlastsicherheit eines solchen Kraftspeichers vorteilhaft. Ein Überdruck kann durch einen sich einstellenden Leckagestrom begrenzt und sogar abgebaut werden. Nach Abklingen des Überdrucks geht der Kraftspeicher wieder in seinen dichten Zustand über, insbesondere liegen die Tellerfederelemente wieder dicht aneinander, wodurch ein Selbstheilungseffekt gegeben ist. Demgegenüber wäre beispielsweise ein Faltenbalg nach einem Überdruck beschädigt und nicht mehr funktionsfähig.

In einer Ausführungsart sind die Tellerfederelemente auf dem Geber aufgereiht, insbesondere auf einem zylindrischen Abschnitt des Gebers hintereinander aufgereiht. Der Außendurchmesser des zylindrischen Abschnitts des Gebers ist dabei an den Innendurchmesser der Tellerfederelemente derart angepasst, dass eine Führung der Tellerfederelemente in Achsrichtung gewährleistet ist und dennoch die Tellerfederelemente entlang dem zylindrischen Abschnitt bewegbar sind, ohne dass es zu einem Verklemmen kommt. In Umfangsrichtung in Bezug auf die Längsrichtung des zylindrischen Abschnitts kann dabei das Spaltmaß variieren, beispielsweise um einen Fluidstrom entlang der Längsachse des zylindrischen Abschnitts zu ermöglichen. Hierzu kann der zylindrische Abschnitt im Querschnitt grundsätzlich kreisförmig sein, aber mindestens eine sich in Längsrichtung erstreckende Abflachung aufweisen.

In einer Ausführungsart stützt sich mindestens ein Tellerfederelement an einem feststehenden Teil der Vorrichtung ab. Das feststehende Teil kann ein Gehäuseteil der Vorrichtung sein oder ein mit dem Gehäuse der Vorrichtung fest verbundenes Anschlussteil für den Anschluss des Fluids.

In einer Ausführungsart weist der Geber ein mit dem Sensor zusammenwirkendes Geberelement auf, beispielsweise einen Permanentmagneten, der auf einen Reedkontakt oder auf ein HALL-Element wirkt.

In einer Ausführungsart weist der Geber ein Führungselement auf, mittels dem der Geber in der Vorrichtung geführt bewegbar ist. Das Führungselement kann dabei einen ersten Abschnitt aufweisen, der in einer Bohrung der Vorrichtung verschiebbar gelagert ist, insbesondere in einer Bohrung eines mit einem feststehenden Teil der Vorrichtung fest verbundenen Anschlusselements für das Fluid. Trotz der die Führung gewährleistenden Passung zwischen dem ersten Abschnitt des Führungselements und der Vorrichtung kann ein Fluidfluss von dem Anschlusselement des Fluids bis hin zum Kraftspeicher möglich sein, beispielsweise über entsprechende Bohrungen im Führungselement oder über einen zwischen dem vorzugsweise zylindrischen ersten Abschnitt und der Bohrung vorhandenen Spalt, der bei kreisrunder Bohrung durch eine mindestens abschnittsweise Abflachung des kreiszylindrischen ersten Abschnitts des Führungselements gebildet sein kann.

Das Führungselement kann einen zweiten Abschnitt aufweisen, der eine größere radiale Erstreckung als der erste Abschnitt aufweist, insbesondere gegenüber dem ersten Abschnitt flanschartig verbreitert ist. Der Kraftspeicher kann in Anlage an dem zweiten Abschnitt des Führungselements sein. Alternativ oder ergänzend zu der Führung des Führungselements mittels des ersten Abschnitts kann das erste Führungselement auch mittels des in einer Bohrung des feststehenden Teils der Vorrichtung verschiebbar gelagerten zweiten Abschnitts geführt sein. Trotz der die Führung gewährleistenden Passung zwischen dem zweiten Abschnitt des Führungselements und der Bohrung kann ein Fluidfluss möglich sein, beispielsweise über entsprechende Bohrungen im Führungselement oder über einen zwischen dem vorzugsweise zylindrischen zweiten Abschnitt und der Bohrung vorhandenen Spalt, der bei kreisrunder Bohrung durch eine mindestens abschnittsweise Abflachung des zweiten Abschnitts gebildet sein kann.

In einer Ausführungsart weist der Geber zwei miteinander verbundene Führungselemente auf, zwischen denen das eigentliche Geberelement angeordnet ist. Beide Führungselemente können mit einem vorgespannten Kraftspeicher beaufschlagt sein, der wie vorstehend beschrieben durch Tellerfederelemente zusammengesetzt sein kann. Bei einem symmetrischen Aufbau sind Hochdruck- und Niederdruckseite austauschbar.

In einer Ausführungsart ist mindestens ein Teil des Geberelements fluiddicht zwischen den Führungselementen angeordnet. Dadurch kann auf dem Geberelement auch ein elektronischer Schaltkreis angeordnet werden, beispielsweise auch ein so genannter Transponder, der von einem an der Vorrichtung angeordneten Lesekopf auslesbar ist.

Die beiden Führungselemente können lösbar miteinander verbunden sein, beispielsweise miteinander verschraubt sein. Hierzu kann eines der beiden Führungselemente eine Gewindebohrung aufweisen, in welche ein von dem anderen Führungselement vorzugsweise einstückig ausgebildeter Gewindestift einschraubbar ist. In diesem Fall kann das Geberelement eine Öffnung für den Durchtritt des Gewindestifts aufweisen. Zur Abdichtung zwischen Führungselement und Geberelement kann jeweils ein Dichtmittel, beispielsweise ein O-Ring, vorgesehen sein.

Weitere Vorteile, Merkmale und Einzelheiten der Erfindung ergeben sich aus den Unteransprüchen und der nachfolgenden Beschreibung, in der unter Bezugnahme auf die Zeichnungen ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt eine Seitenansicht eines Ausführungsbeispiels einer erfindungsgemäßen Vorrichtung,
- Fig. 2: zeigt vergrößert einen Schnitt II-II durch die Vorrichtung der Fig. 1,
- Fig. 3: zeigt eine perspektivische Ansicht des Gebers der Vorrichtung der Fig. 1,
- Fig. 4: zeigt einen Schnitt durch den Geber der Fig. 3 entlang seiner Längsachse,
- Fig. 5: zeigt eine perspektivische Ansicht des Anschlussstücks der Vorrichtung der Fig. 1, und
- Fig. 6: zeigt einen Schnitt durch das Anschlussstück der Fig. 5 entlang der Längsachse

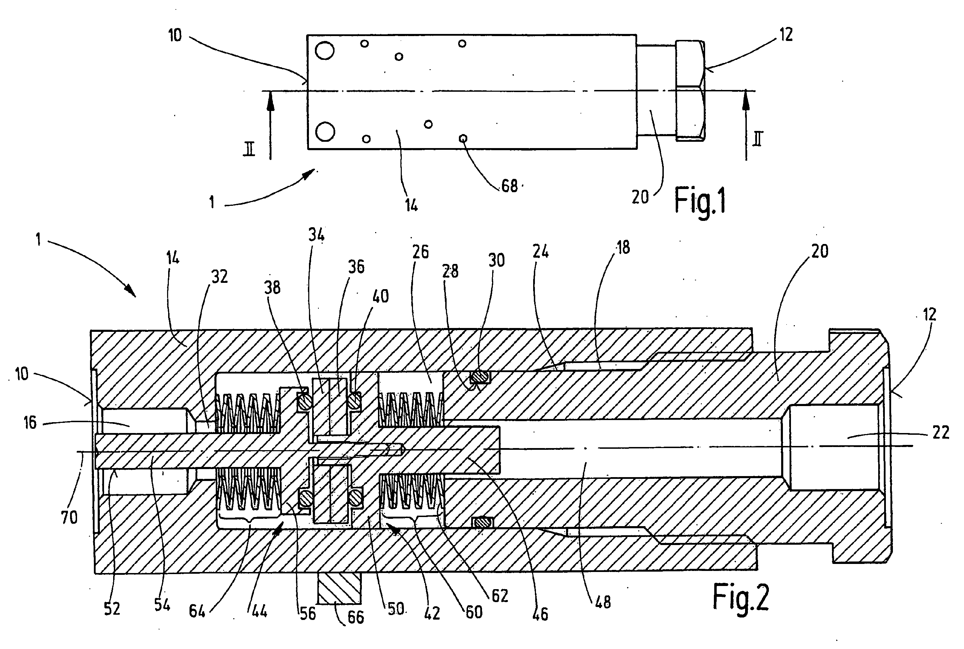

Die Fig. 1 zeigt eine Seitenansicht eines Ausführungsbeispiels einer erfindungsgemäßen Vorrichtung 1 zum Messen einer Druckdifferenz zwischen einer Hochdruckseite 10 und einer Niederdruckseite 12.
Die Fig. 2 zeigt einen Schnitt II-II durch die Vorrichtung 1 in gegenüber der Fig. 1 vergrößerter Darstellung.

Die Vorrichtung 1 weist einen Grundkörper 14 mit einer im Wesentlichen zylindrischen, insbesondere kreiszylindrischen Außenkontur auf. Von der in der Darstellung in der Fig. 2 linken Stirnseite ist eine Gewindebohrung 16 in den Grundkörper 16 eingebracht, die einen hochdruckseitigen Anschluss der Vorrichtung 1 bildet. Auf der gegenüberliegenden Stirnseite weist der Grundkörper eine zweite Gewindebohrung 18 mit einem gegenüber der ersten Gewindebohrung 16 größeren Durchmesser auf, in die ein niederdruckseitiges Anschlussstück 20 einschraubbar ist, das wiederum eine dritte Gewindebohrung 22 aufweist, für den niederdruckseitigen Anschluss der Vorrichtung 1. Die zweite Gewindebohrung 18 geht über einen kegelflächenförmigen Übergangsabschnitt 24 in eine vorzugsweise kreiszylindrische Bohrung 26 über, in welche das Anschlussstück 20 hineinragt und in deren Bereich ein in eine Nut 28 des Anschlussstücks 20 eingelegtes Dichtmittel 30 den Grundkörper 14 mit dem Anschlussstück 20 fluiddicht verbindet. Die Bohrung 26 weist am Übergang zu der ersten Gewindebohrung 16 des hochdruckseitigen Anschlusses 10 einen Verbindungsabschnitt 32 auf, dessen lichte Weite geringer ist als die der Bohrung 26 und auch geringer als die der ersten Gewindebohrung 16.

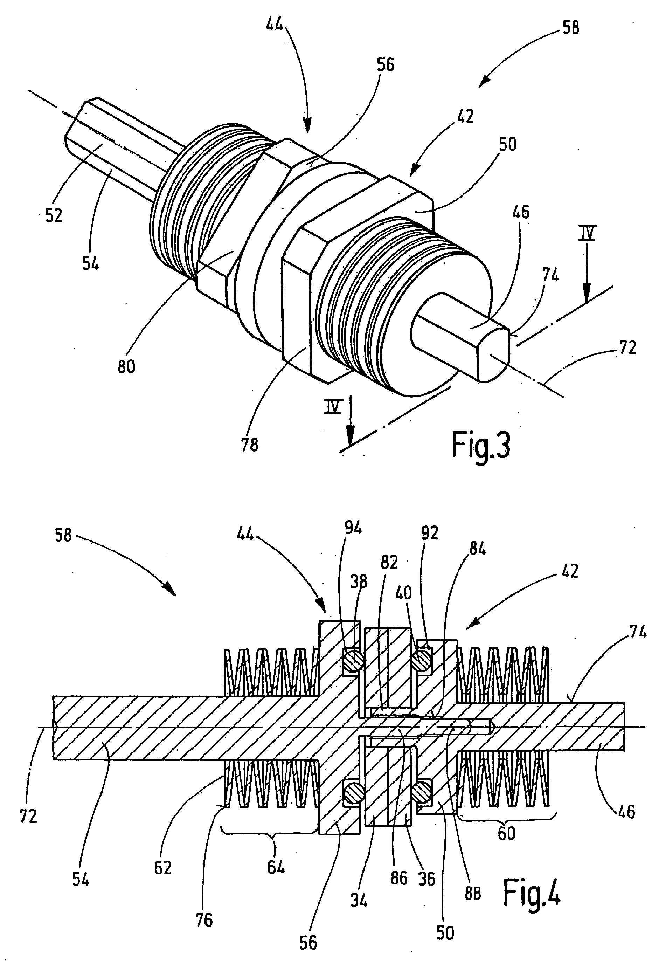

In dem zylindrischen Abschnitt 26 ist ein Geber 58 (Fig. 3 und 4) der Vorrichtung 1 angeordnet, der im Ausführungsbeispiel zwei ringscheibenförmige Geberelemente 34, 36 aufweist, die unter Zwischenlage jeweils eines Dichtmittels 38, 40, insbesondere jeweils eines O-Ringes, zwischen einem ersten, niederdruckseitigen Führungselement 42 und einem zweiten, hochdruckseitigen Führungselement 44 angeordnet sind, aufweist. Das erste Führungselement 42 weist einen ersten Abschnitt 46 auf, der im Wesentlichen zylindrisch ist und in einer zylindrischen Bohrung 48 des Anschlussstücks 20 geführt ist. Ein zweiter Abschnitt 50 des ersten Führungselements 42 ist gegenüber dem ersten Abschnitt 46 flanschartig verbreitert und ebenfalls abschnittsweise zylindrisch, aber nicht kreiszylindrisch, und dadurch in der Bohrung 26 des Grundkörpers 14 geführt. Sowohl der erste Abschnitt 46 als auch der zweite Abschnitt 50 weisen an ihrer Außenkontur Abflachungen 74, 78 (Fig. 3) auf, durch welche das Spaltmaß zwischen dem ersten und zweiten Abschnitt 46, 50 und der jeweils zugehörigen kreiszylindrischen Bohrung 48, 26 vergrößert ist, so dass ein Fluidstrom in Richtung der mit der Längsachse 70 der Vorrichtung 1 zusammenfallenden Längsachse 72 des Gebers 58 (Fig. 3) möglich ist.

In entsprechender Weise ist auch das zweite Führungselement 44 aufgebaut, insbesondere weist dieses ebenfalls einen ersten Abschnitt 54 und einen demgegenüber flanschartig verbreiterten zweiten Abschnitt 56 mit Abflachungen 52, 80 auf.

Die Vorrichtung 1 weist außerdem einen Kraftspeicher 60 auf, der im Ausführungsbeispiel aus hintereinander angeordneten Tellerfederelementen 62 gebildet ist. Die Tellerfederelemente 62 sind im Ausführungsbeispiel jeweils so angeordnet sind, dass benachbarte Tellerfederelemente 62 mit ihrer inneren Stirnseiten dichtend aneinander liegen oder mit ihrer äußeren Stirnseiten dichtend aneinander liegen. Am Ende des Kraftspeichers 60 bzw. des Tellerfederpaketes ist jeweils ein Tellerfederelement 62 vorgesehen, das mit seiner äußeren Stirnseite einerseits an einem feststehenden Teil der Vorrichtung 1 in Anlage ist, auf der Niederdruckseite 12 an dem Anschlussstück 20, sowie an einem der Führungselemente 42, 44, insbesondere jeweils an dem zweiten Abschnitt 50, 56 der Führungselemente 44, 42.

Im Ausführungsbeispiel ist sowohl auf der Niederdruckseite ein Kraftspeicher 60 angeordnet als auch auf der Hochdruckseite ein weiterer Kraftspeicher 64. Die Kraftspeicher 60, 64 sind im Wesentlichen identisch aufgebaut, insbesondere durch die Hintereinanderanordnung von Tellerfederelementen 62 gebildet. Der niederdruckseitige Kraftspeicher 60 ist dabei durch die Verbindung des Anschlussstücks 20 mit dem Grundkörper 14 derart vorgespannt, dass die Tellerfederelemente 62 an dem Anschlussstück 20 einerseits und an dem zweiten Abschnitt 50 des ersten Führungselements 42 andererseits dicht anliegen. Außerdem liegen die benachbarten Tellerfederelemente 62 des niederdruckseitigen Kraftspeichers 60 dicht aneinander. Hinzu kommt im Ausführungsbeispiel, dass Fluid von der Hochdruckseite 10 aus auf der Außenseite des Kraftspeichers 60 ansteht, und dadurch eine zusätzliche Dichtkraft auf die Dichtkanten der Tellerfederelemente 62 ausgeübt wird.

Diese dichte Anlage bleibt auch erhalten, wenn aufgrund einer sich verändernden Druckdifferenz zwischen Hochdruckseite 10 und Niederdruckseite 12 das Geberelement 34, 36 in Richtung der Längsachse 70 verschoben wird, weil sich dann die hintereinander angeordneten Tellerfederelemente 62 den Kraftspeicher 60 in der Art eines Faltenbalgs axial verlängern bzw. verkürzen.

Die Position des Geberelements 34, 36, bei dem es sich um einen axial polarisierten Permanentmagneten handeln kann, kann von einem an oder im Grundkörper 14 angeordneten Sensor 66 detektiert und in ein elektrisches Signal umgewandelt werden. Zur Festlegung des Sensors 66 und/oder zur Befestigung der Vorrichtung 1 weist der Grundkörper 14 außenseitig Befestigungsöffnungen 68 auf, insbesondere Gewindebohrungen.

Die Tellerfederelemente 62 sind auf dem ersten Abschnitt 46 des ersten Führungselements 42 bzw. auf dem ersten Abschnitt 54 des zweiten Führungselements 44 aufgereiht. Dabei ist der Außendurchmesser des ersten Abschnitts 46, 54 jeweils etwas geringer als die lichte Weite der zentrischen Öffnung der ringscheibenförmigen Tellerfederelemente 62. Um einen Fluidfluss in diesem Bereich zu gewährleisten, ist zwischen der Außenkontur des ersten Abschnitts 46, 54 und dem Innendurchmesser der Tellerfederelemente 62 in Umfangsrichtung um die Längsachse 70 mindestens abschnittsweise ein Spalt vorhanden, beispielsweise indem die ansonsten kreiszylindrischen ersten Abschnitte 46, 54 der Führungselemente 42, 44 eine Abflachung 52, 74 aufweisen.

Die Fig. 3 zeigt eine perspektivische Ansicht des Gebers 58 der Vorrichtung 1 der Fig. 1, und die Fig. 4 zeigt einen Schnitt durch den Geber 58 entlang seiner Längsachse 72 in gegenüber der Fig. 1 vergrößerter Darstellung. Die Abflachung 74 an der Außenkontur des ersten Abschnitts 46 des ersten Führungselements 42 ist gegenüber der Abflachung 52 des ersten Abschnitts 54 des zweiten Führungselements 44 um etwa 45° verdreht. Die Tellerfederelemente 62 bilden sowohl an ihrer inneren Stirnseite als auch an ihrer äußeren Stirnseite 76 jeweils eine Dichtkante 76 aus, durch die sich infolge der Vorspannung des Kraftspeichers 60, 64 auf der Hochdruckseite 10 und/oder auf der Niederdruckseite 12 eine dichte Anlage der Tel lerfederelemente 62 sowohl untereinander als auch gegenüber dem Geber 58 ergibt.

Die zweiten Abschnitte 50, 56 weisen auf ihrer Außenumfangsseite ebenfalls Abflachungen 78, 80 auf, die bezogen auf die Längsachse 72 des Gebers 58 um etwa 45° gegeneinander gedreht sind. Diese Abflachungen 78, 80 können auch als Werkzeugangriffsfläche dienen für ein Verschrauben der beiden Führungselemente 42, 44 miteinander. Das erste Führungselement 42 weist hierzu einen von dem zweiten Abschnitt 50 auf der dem ersten Abschnitt 46 gegenüberliegenden Seite abstehenden zapfenartigen Abschnitt 82 auf, in den eine bis in den zweiten Abschnitt 50 hineinragende Gewindebohrung 84 eingebracht ist, die sich darüber hinaus auch noch in den ersten Abschnitt 46 hinein erstreckt, wobei der in den ersten Abschnitt 46 sich hinein erstreckende Abschnitt vorzugsweise kein Innengewinde aufweist. In die Gewindebohrung 84 ist ein von dem zweiten Führungselement 44, insbesondere von dessen zweiten Abschnitt 56 einstückig ausgebildeter Gewindestift 86 einschraubbar, dessen endseitig gewindeloser Abschnitt 88 im verschraubten Zustand bis in den Bereich des ersten Abschnitts 46 des ersten Führungselements 42 hineinragt.

Auf den den Geberelementen 34, 36 zugewandten stirnseitigen Enden weisen die zweiten Abschnitte 50, 56 der Führungselemente 42, 44 jeweils eine ringförmige Nut 92, 94 auf, in die ein Dichtmittel 38, 40 einsetzbar ist.

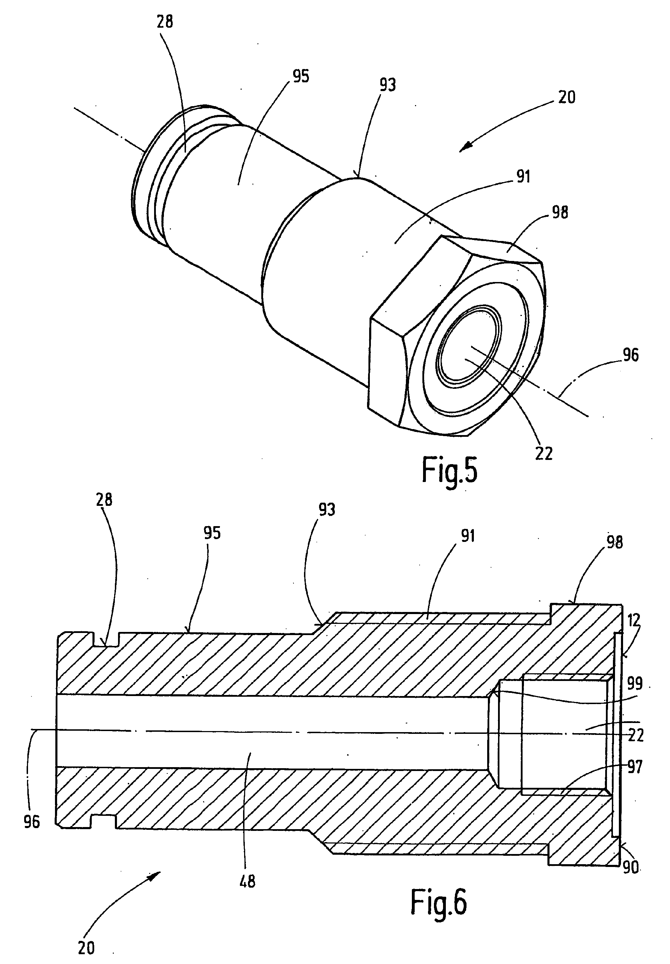

Die Fig. 5 zeigt eine perspektivische Ansicht des Anschlussstücks 20, und die Fig. 6 zeigt einen Schnitt entlang der Längsachse 96 des Anschlussstücks 20 durch das Anschlussstück 20 in gegenüber der Fig. 1 vergrößerter Darstellung. An seinem von dem Geber 58 abgewandten Ende bildet das Anschlussstück 20 einstückig eine Werkzeugangriffsfläche 98 aus, insbesondere einen Sechskant. Daran schließt sich in Richtung auf den Geber 58 ein Abschnitt mit einem Außengewinde 91 an, mittels dem das Anschlussstück 20 mit dem Grundkörper 14 der Vorrichtung 1 verschraubbar ist. Daran schließt sich ein kegelförmiger Abschnitt 93 an, dem ein zylindrischer Abschnitt 95 bis zur Nut 28 zur Aufnahme des Dichtmittels 30 (Fig. 2) folgt.

Innenseitig ist zwischen der zylindrischen Bohrung 48 zur Aufnahme des ersten Abschnitts 46 des ersten Führungselements 42 und der einen größeren Durchmesser aufweisenden dritten Gewindebohrung 22 mit dem Innengewinde 97 eine kegelförmige Übergangsfläche 99 angeordnet. Endseitig weitet sich die dritte Gewindebohrung 22 noch einmal über einen kurzen axialen Abschnitt auf, in die ein Dichtmittel einsetzbar sein kann, so dass stirnseitig eine ringförmige und radial außenliegende Anschlussfläche 90 gebildet ist.

## Patentansprüche

1. Vorrichtung (1) zum Messen einer Druckdifferenz zwischen einer Hochdruckseite (10) und einer Niederdruckseite (12), wobei die Vorrichtung (1) einen von einem vorgespannten Kraftspeicher (60) in mindestens einer Richtung bewegbaren Geber (58) aufweist, dessen Position in Bezug auf einen feststehenden Teil der Vorrichtung (1) abhängig ist von der zu messenden Druckdifferenz, und die Vorrichtung (1) weiterhin einen Sensor (66) aufweist, mit dem die Position des Gebers (58) und damit die Druckdifferenz detektierbar ist, **dadurch gekennzeichnet, dass** der Kraftspeicher (60) in dichter Anlage an dem Geber (58) einerseits und an einem feststehenden Teil der Vorrichtung (1) andererseits ist und dadurch die Hochdruckseite (10) gegenüber der Niederdruckseite (12) abdichtet, dass der Kraftspeicher (60) mehrere, hintereinander angeordnete Tellerfederelemente (62) aufweist, und dass benachbarte Tellerfederelemente (62) jeweils mit ihrer inneren Stirnseite dichtend aneinanderliegen oder jeweils mit ihrer äußeren Stirnseite dichtend aneinanderliegen.

2. Vorrichtung (1) nach Anspruch 1, **dadurch gekennzeichnet, dass** der Kraftspeicher (60) durch seine Vorspannung in dichter Anlage an dem Geber (58) einerseits und/oder in dichter Anlage an dem feststehenden Teil der Vorrichtung (1) gehalten ist.

3. Vorrichtung (1) nach Anspruch 1 oder 2, **dadurch gekennzeichnet, dass** der Kraftspeicher (60) durch den Differenzdruck in dichter Anlage an dem Geber (58) einerseits und/oder in dichter Anlage an dem feststehenden Teil der Vorrichtung (1) gehalten ist.

4. Vorrichtung (1) nach einem der Ansprüche 1 bis 3, **dadurch gekennzeichnet, dass** die dichte Anlage des Kraftspeichers (60) im Falle eines auftretenden Überdrucks aufhebbar ist und durch eine sich dabei ergebende Öffnung ein Leckagestrom zwischen Hochdruckseite (10) und Niederdruckseite (12) fließen kann, und dass diese Öffnung aufgrund der Vorspannung des Kraftspeichers (60) nach Abklingen des Überdrucks selbsttätig wieder schließbar ist.

5. Vorrichtung (1) nach einem der Ansprüche 1 bis 4, **dadurch gekennzeichnet, dass** die Tellerfederelemente (62) auf dem Geber (58) aufgereiht sind, insbesondere auf einem zylindrischen Abschnitt des Gebers (58) aufgereiht sind.

6. Vorrichtung (1) nach einem der Ansprüche 1 bis 5, **dadurch gekennzeichnet, dass** sich mindestens ein Tellerfederelement (62) an einem feststehenden Teil der Vorrichtung (1) abstützt.

7. Vorrichtung (1) nach Anspruch 1 oder einem der vorangehenden Ansprüche, **dadurch gekennzeichnet, dass** der Geber (58) ein mit dem Sensor (66) zusammenwirkendes Geberelement (34, 36) und mindestens ein Führungselement (42, 44) aufweist, mittels dem der Geber (58) in der Vorrichtung (1) geführt bewegbar ist.

8. Vorrichtung (1) nach Anspruch 7, **dadurch gekennzeichnet, dass** der Kraftspeicher (60) in Anlage an dem Führungselement (42, 44) ist und dadurch den Geber (58) in mindestens einer Bewegungsrichtung vorspannt.

9. Vorrichtung (1) nach Anspruch 7 oder 8, **dadurch gekennzeichnet, dass** das Führungselement (42, 44) einen ersten Abschnitt (46, 54) und einen zweiten Abschnitt (50, 56) aufweist, wobei der zweite Abschnitt (50, 56) eine größere radiale Erstreckung als der erste Abschnitt (46, 54) aufweist, insbesondere dass der zweite Abschnitt (50, 56) flanschartig gegenüber dem ersten Abschnitt (46, 54) verbreitert ist.

10. Vorrichtung (1) nach Anspruch 9, **dadurch gekennzeichnet, dass** der Kraftspeicher (60) in Anlage an dem zweiten Abschnitt (50, 56) des Führungselements (42, 44) ist.

11. Vorrichtung (1) nach Anspruch 9 oder 10, **dadurch gekennzeichnet, dass** der erste Abschnitt (46, 54) des Führungselements (42, 44) in einer Bohrung (48) der Vorrichtung (1) verschiebbar gelagert ist, insbesondere in einer Bohrung (48) eines mit einem feststehenden Teil der Vorrichtung (1) fest verbundenen ersten Anschlussstücks (20).

12. Vorrichtung (1) nach einem der Ansprüche 9 bis 11, **dadurch gekennzeichnet, dass** der zweite Abschnitt (50, 56) des Führungselements (42, 44) in einer Bohrung (26) des feststehenden Teils der Vorrichtung (1) verschiebbar gelagert ist.

13. Vorrichtung (1) nach einem der Ansprüche 9 bis 12, **dadurch gekennzeichnet, dass** der Geber (58) zwei miteinander verbundene Führungselemente (42, 44) aufweist, zwischen denen mindestens ein Geberelement (34, 36) angeordnet ist.

## Claims

1. A device (1) for measuring a pressure differential between a high pressure side (10) and a low pressure side (12), the device (1) having a transmitter (58) that can be moved by means of a biased energy accumulator (60) in at least one direction, the position of said transmitter relative to a stationary part of the device (1) being dependent upon the pressure differential to be measured, and the device (1) furthermore has a sensor (66) with which the position of the transmitter (58) and thereby the pressure differential can be detected, **characterised in that** the energy accumulator (60) sits closely against the transmitter (58) on the one hand and against a stationary part of the device (10) on the other hand, thereby sealing the high pressure side (10) relative to the low pressure side (12), that the energy accumulator (60) has a number of disc spring elements (62) arranged one behind the other, and that adjacent disc spring elements (62) respectively sit closely against one another with their inner face side or respectively sit closely against one another with their outer face side.

2. The device (1) according to Claim 1, **characterised in that** the energy accumulator (60) is held by its bias in tight contact against the transmitter (58) on the one hand and/or in tight contact against the stationary part of the device (1).

3. The device (1) according to Claim 1 or 2, **characterised in that** the energy accumulator (60) is held by the pressure differential in tight contact against the transmitter (58) on the one hand and/or in tight contact against the stationary part of the device (1).

4. The device (1) according to any of Claims 1 to 3, **characterised in that** the tight contact of the energy accumulator (60) can be lifted in the event of overpressure occurring and a leakage flow can flow through an opening thereby produced between the high pressure side (10) and the low pressure side (12), and that this opening can be closed again upon the basis of the bias of the energy accumulator (60) after the overpressure has subsided automatically.

5. The device (1) according to any of Claims 1 to 4, **characterised in that** the disc spring elements (62) are lined up on the transmitter (58), in particular on a cylindrical section of the transmitter (58).

6. The device (1) according to any of Claims 1 to 5, **characterised in that** at least one disc spring element (62) is supported on a stationary part of the device (1).

7. The device (1) according to Claim 1 or any of the preceding claims, **characterised in that** the transmitter (58) has a transmitter element (34, 36) co-operating with the sensor (66) and at least one guide element (42, 44) by means of which the transmitter (58) is guided moveably in the device (1).

8. The device (1) according to Claim 7, **characterised in that** the energy accumulator (60) rests against the guide element (42, 44) and thus biases the transmitter (58) in at least one direction of movement.

9. The device (1) according to Claim 7 or 8, **characterised in that** the guide element (42, 44) has a first section (46, 54) and a second section (50, 56), the second section (50, 56) having a larger radial extension than the first section (46, 54), in particular that the second section (50, 56) is widened in the manner of a flange relative to the first section (46, 54).

10. The device (1) according to Claim 9, **characterised in that** the energy accumulator (60) rests against the second section (50, 56) of the guide element (42, 44).

11. The device (1) according to Claim 9 or 10, **characterised in that** the first section (46, 54) of the guide element (42, 44) is mounted displaceably within a bore hole (48) of the device (1), in particular within a bore hole (48) of a first connection piece (20) securely connected to a stationary part of the device (1).

12. The device (1) according to any of Claims 9 to 11, **characterised in that** the second section (50, 56) of the guide element (42, 44) is displaceably mounted in a bore hole (26) of the stationary part of the device (1).

13. The device (1) according to any of Claims 9 to 12, **characterised in that** the transmitter (58) has two guide elements (42, 44) connected to one another, between which is disposed at least one transmitter element (34, 36).

## Revendications

1. Dispositif (1) de mesure d'une différence de pression entre un côté (10) de haute pression et un côté (12) de basse pression, dans lequel le dispositif (1) comporte un transmetteur (58) qui peut être déplacé dans au moins un sens par un accumulateur (60) d'énergie mis sous tension préalable et dont la position par rapport à une partie fixe du dispositif (1) dépend de la différence de pression à mesurer et le dispositif (1) comporte, en outre, un capteur (66) par lequel la position du transmetteur (58) et ainsi la différence de pression peut être détectée, **caractérisé en ce que** l'accumulateur (60) d'énergie est en application étroite sur le transmetteur (58) d'une part et sur une partie fixe du dispositif (1) d'autre part et rend ainsi étanche le côté (10) de haute pression par rapport au côté (12) de basse pression, **en ce que** l'accumulateur (60) d'énergie comporte plusieurs éléments (62) de ressort à disque disposés les uns derrière les autres et **en ce que** des éléments (62) voisins de ressort à disque s'appliquent l'un contre l'autre respectivement d'une manière étanche par leur côté frontal intérieur ou respectivement de manière étanche par leur côté frontal extérieur.

2. Dispositif (1) suivant la revendication 1, **caractérisé en ce que** l'accumulateur (60) d'énergie est par sa mise sous tension préalable maintenu appliqué étroitement au transmetteur (58) d'une part et/ou appliqué étroitement à la partie fixe du dispositif (1).

3. Dispositif (1) suivant la revendication 1 ou 2, **caractérisé en ce que** l'accumulateur (60) d'énergie est par la différence de pression maintenu appliqué étroitement au transmetteur (58) d'une part et/ou appliqué étroitement à la partie fixe du dispositif (1).

4. Dispositif (1) suivant l'une des revendications 1 à 3, **caractérisé en ce que** l'application étroite de l'accumulateur (60) d'énergie peut être supprimée dans le cas de l'apparition d'une surpression et un courant de fuite entre le côté (10) de haute pression et le côté (12) de basse pression peut s'écouler par une ouverture qui s'ensuit et **en ce que** cette ouverture peut être refermée automatiquement après la décroissance de la surpression en raison de la mise sous tension préalable de l'accumulateur (60) d'énergie.

5. Dispositif (1) suivant l'une des revendications 1 à 4, **caractérisé en ce que** les éléments (62) de ressort à disque sont rangés sur le transmetteur (58), en étant rangés notamment sur une partie cylindrique du transmetteur (58.

6. Dispositif (1) suivant l'une des revendications 1 à 5, **caractérisé en ce qu'**au moins un élément (62) de ressort à disque s'appuie sur une partie fixe du dispositif (1).

7. Dispositif (1) suivant la revendication 1 ou l'une des revendications précédentes, **caractérisé en ce que** le transmetteur (58) comporte un élément (34, 36) de transmetteur, coopérant avec le capteur (66), et au moins un élément (42, 44) de guidage, au moyen duquel le transmetteur (58) peut être déplacé de manière guidée dans le dispositif (1).

8. Dispositif (1) suivant la revendication 7, **caractérisé en ce que** l'accumulateur (60) d'énergie est appliqué à l'élément (42, 44) de guidage et met ainsi le transmetteur (58) sous tension préalable dans au moins un sens de déplacement.

9. Dispositif (1) suivant la revendication 7 ou 8, **caractérisé en ce que** l'élément (42, 44) de guidage a une première partie (46, 54) et une deuxième partie (50, 56), la deuxième partie (50, 56) ayant une étendue radiale plus grande que la première partie (46, 54), la deuxième partie (50, 56) étant notamment plus large, en étant du type à bride, que la première partie (46, 54).

10. Dispositif (1) suivant la revendication 9, **caractérisé en ce que** l'accumulateur (60) d'énergie est appliqué à la deuxième partie (50, 56) de l'élément (42, 44) de guidage.

11. Dispositif (1) suivant la revendication 9 ou 10, **caractérisé en ce que** la première partie (46, 54) de l'élément (42, 44) de guidage est montée coulissante dans un trou (48) du dispositif (1), notamment dans un trou (48) d'une première pièce (20) de raccord reliée de manière fixe à une partie fixe du dispositif (1).

12. Dispositif (1) suivant l'une des revendications 9 à 11, **caractérisé en ce que** la deuxième partie (50, 56) de l'élément (42, 44) de guidage est montée coulissante dans un trou (26) de la partie fixe du dispositif (1).

13. Dispositif (1) suivant l'une des revendications 9 à 12, **caractérisé en ce que** le transmetteur (58) comporte deux éléments (42, 44) de guidage, qui sont reliés l'un à l'autre et entre lesquels est disposé au moins un élément (34, 36) de transmetteur.
